# EUROPÄISCHE PATENTSCHRIFT

(11) **EP 1 375 220 B1**
(45) Veröffentlichungstag und Bekanntmachung des Hinweises auf die Patenterteilung: **07.02.2007**
(21) Anmeldenummer: 03012661.9
(22) Anmeldetag: 04.06.2003
(51) Int. Cl.: B60J 1/20

(54) **Fensterrollo mit klapperfreier Führung**
Roller blind with rattle-free runner
Store avec guidage anti-cliquetis

(30) Priorität: 24.06.2002 DE 10228027
(43) Veröffentlichungstag der Anmeldung: 02.01.2004
(73) Patentinhaber: BOS GmbH & Co. KG, 73760 Ostfildern (DE)
(72) Erfinder: Hansen, Melf, 73666 Baltmannsweiler (DE); Maier, Matthias, 73733 Esslingen (DE)
(74) Vertreter: Rüger, Barthelt & Abel Patentanwälte

(56) Entgegenhaltungen:
- EP-A- 1 215 063
- DE-A- 3 413 966
- FR-A- 902 518
- US-A- 1 741 609
- US-A- 1 904 968
- US-A- 2 491 765
- US-A- 4 792 178

## Beschreibung

Aus der Praxis sind Heckscheibenrollos für Kraftfahrzeuge bekannt. Zu diesen Rollos gehört eine heute üblicherweise unter der Hutablage angebrachte Wickelwelle die dort drehbar gelagert ist. An der Wickelwelle ist mit einer Kante eine Rollobahn befestigt, die über einen Schlitz in der Hutablage ausziehbar ist. Da die Rollobahn in sich nicht steif ist, muss sie geführt werden. Hierzu verlaufen seitlich der abzuschaffenden Seite Führungsschienen, in denen eine Zugstangenanordnung geführt ist. Die Zugstangenanordnung ist mit der Forderkante der Rollobahn befestigt, d.h. jener Kante, die beim Öffnen und Schließen des Fensterrollos den größten Weg zurücklegt.

Die Führungsschienen weisen einen etwa C-förmigen Querschnitt auf, so dass ein hinterschnittener Kanal entsteht, der sich über einen Schlitz nach außen öffnet. Die Schlitze der beiden Führungsschienen zeigen aufeinander zu. Darin können Führungskörper der Zugstangenanordnung so geführt werden, dass die Führungskörper in Richtung rechtwinklig zu der Längsachse der Führungsschiene nicht herausgezogen werden können.

Obwohl die Führungskörper in aller Regel federvorgespannt sind, und auch an der Zugstangenanordnung die Kraft des Federmotors wirkt, die bestrebt ist, die Rollobahn auf der Wickelwelle aufzuwickeln, sind derartige Anordnungen nicht vollständig körperfrei. Kraftkomponenten, die senkrecht zu jener Ebene wirksam sind, die durch die aufgespannte Rollofläche definiert ist, werden in erste Linie nur durch den Reibschluss aufgenommen, der zwischen den Führungskörpern und den Betätigungseinrichtungen zum Transport der Zugstangenanordnung längs der Führungsschienen verwendet wird. Die Kräfte können durchaus größer werden, und die Führungsköper können in Querrichtung klappern. Die Frage, ob diese Geräuschentwicklung entsteht, hängt von der Position des Fensterrollos, der Einbaulage, den aufgrund der Straßenverhältnisse auftretenden Erschütterungen und anderen Faktoren ab.

Ein Fensterrollo mit einer Wickelwelle, einer Zugstangenanordnung und einer Führungsschiene ist aus der US-A-2 491 765 bekannt.

Mit den bisherigen Lösungen ist eine Klapperfreiheit nicht vollständig zu gewährleisten.

Ausgehend hiervon ist es Aufgabe der Erfindung, ein Fensterrollo für Kraftfahrzeuge zu schaffen, bei der die Zugstangenanordnung in den Führungsschienen mit Sicherheit klapperfrei geführt ist.

Diese Aufgabe wird erfindungsgemäß mit dem Fensterrollo mit den Merkmalen des Anspruches 1 gelöst.

Bei dem neuen Fensterrollo wird wie beim Stand der Technik die Zugstangenanordnung in einer oder zwei Führungsschienen geführt. Mit Hilfe einer Transport- oder Betätigungseinrichtung, wird die Zugstangenanordnung längs den Führungsschienen bewegt.

Um die Klapperfreiheit zu gewährleisten, verläuft in Richtung der Führungsschiene wenigstens eine elastische Lippe, die durch die Zugstangenanordnung elastisch verformt wird. Mit Hilfe der Lippe wird die Zugstangenanordnung elastisch und nachgiebig gegen eine entsprechende Wand der Führungsschiene gedrückt, und zwar mit einer verhältnismäßig großen Kraft. Dadurch können Schwingungen im Fahrzeug keine Klappergeräusche zwischen der Führungsschiene und der Zugstangenanordnung auslösen.

Darüber hinaus hat die Anordnung den Vorteil, dass sie die Führungsschiene weitgehend verdeckt. Es ist nicht mehr nötig, die Führungsschiene in einer Farbe zu gestalten, die der Farbe der Innenverkleidung, des Fahrzeugs entspricht. Es genügt, wenn die Lippe dieser Farbe aufweist, während die Führungsschienen ein einfaches Strangpressprofil vorzugsweise aus Aluminium ist.

Damit die Lippe unmittelbar an der Führungsschiene bleibt und durch die elastische Verformung auch nicht weggedrückt werden kann, sind zweckmäßigerweise formschlüssige Verbindungsmittel vorgesehen, um die Lippe mit der Führungsschiene zu verbinden. Formschlüssige Verbindungsmittel sind einer stoffschlüssigen Verbindung vorzuziehen, weil sie montagetechnisch einfacher sind, und in jedem Falle dauerhaft.

Die formschlüssig wirkenden Halte- oder Verbindungsmittel können von einer hinterschnittenen Nut oder einer im Querschnitt L- oder Z-förmigen Leiste gebildet sein. Die Lippe trägt eine korrespondierende Befestigungseinrichtung.

Vorzugsweise ist die Führungsschiene mit einer durchgehenden Flanschleiste versehen, um sie in der Karosserie einfach zu befestigen. Ferner kann die Führungsschiene eine Flanschleiste aufweisen, an der ein Teil der Seitenverkleidung des Fahrzeugs zu befestigen ist.

Wenn lediglich eine einzige Lippe verwendet wird, muss diese an der Stelle, an der sich die Zugstangenanordnung befindet stark verformt werden, wenn zusätzlich zu der Klapperschutzwirkung auch noch die Abdeckwirkung von blanken Teile der Führungsschiene gewünscht ist.

Wenn eine solche starke Verformung unerwünscht ist, ist es zweckmäßig anstelle einer einzigen Lippe zwei Lippen zu verwenden, wobei die Stoßstelle zwischen den Lippen dem Verlauf des Schlitzes folgt.

Das erfindungsgemäße Fensterrollo lässt sich auch für Fenster verwenden, bei denen sich die Breite längs des Weges der Rollobahn verändert. Hierzu ist die Zugstangenanordnung teleskopartig in der Länge verstellbar. Die Verstellbarkeit kann erreicht werden, wenn Führungselemente vorgesehen sind, die bzgl. eines Mittelstücks verstellbar sind. Die Führungskörper sind in ihrem Querschnitt an den Querschnitt des Kanals in der Führungsschiene angepasst.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung ist ein Ausführungsbeispiel des Gegenstandes der Erfindung dargestellt. Es zeigen:
- Fig. 1: eine Heckpartie eines Kraftfahrzeuges mit einem Heckscheibenrollo,
- Fig. 2: das Heckscheibenrollo gemäß der Erfindung,
- Fig. 3: eine erste Ausführungsform für die Verwendung lediglich einer Lippe und
- Fig. 4: eine Ausführungsform mit zwei Lippen, geschnitten in einer Ebene rechtwinklig zu der Längsachse der Führungsschiene.

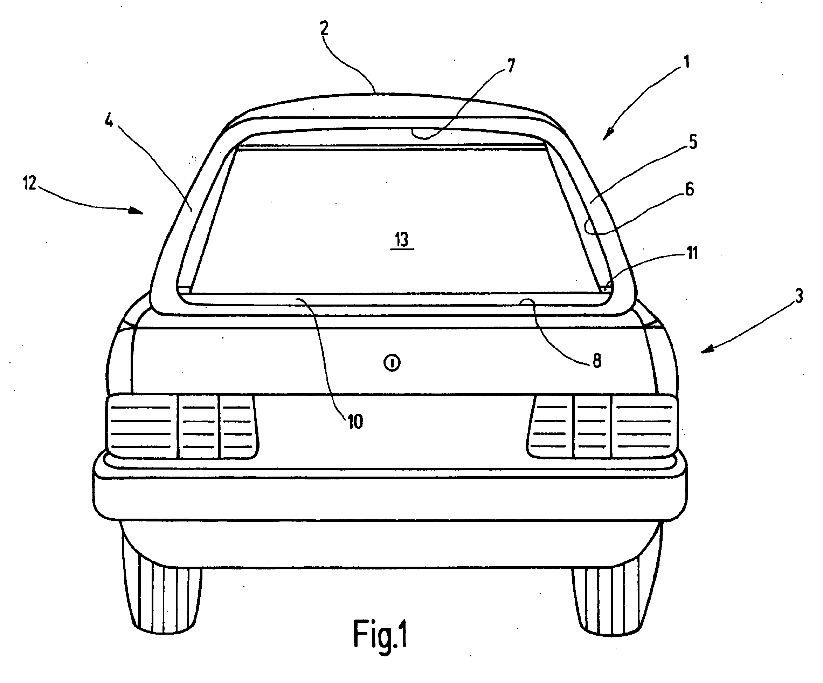

Figur 1 zeigt in einer schematischen Darstellung eine Rückansicht eines Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von Fensterbrüstung 8 begrenzt ist. In der Heckfensteröffnung sitzt in bekannter Weise beispielsweise mittels Fenstergummi eingeklebt eine Heckscheibe 9.

Im Inneren des Pkw befindet sich vor der Innenseite der Heckscheibe 9 eine Hutablage 10, die sich zwischen der Fensterunterkante 8 und einer in der Figur nicht erkennbaren Rücksitzlehne horizontal erstreckt. In der Hutablage 10 verläuft ein gerader Auslaufschlitz 11.

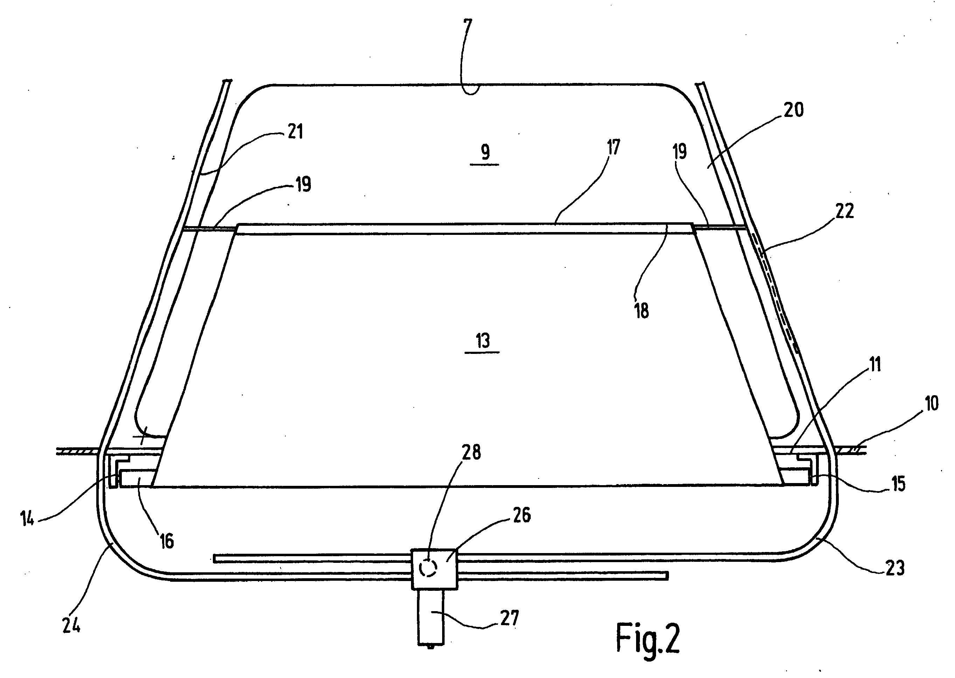

Der Auslaufschlitz 11 gehört zu einem Heckfensterrollo 12, dessen prinzipieller Aufbau in Figur 2 stark schematisiert veranschaulicht ist.

Das Heckfensterrollo 12 weist eine Rollobahn 13 auf, die in Figur 1 im ausgezogenen Zustand veranschaulicht ist. Sie hat einen trapezförmigen Zuschnitt um das in seiner Gesamtgestalt etwa trapezförmige Heckfenster abzuschatten.

Wie Figur 2 erkennen lässt, ist unter der Hutablage 10 mit Hilfe von zwei Winkelkonsolen 14 und 15 eine Wickelwelle 16 drehbar gelagert. An dieser Wickelwelle 16 ist mit einer Kante die Rollobahn 13 befestigt. Ihre andere von der Wickelwelle 6 abliegende Kante ist mit einer Zugstabanordnung 17 verbunden.

Mittels eines nicht erkennbaren Federmotors in der Wickelwelle 18 wird die Wickelwelle 18 im Sinne des Aufwickeins der Rollobahn 13 vorgespannt.

Von der Zugstabanordnung 17 sind im Wesentlichen zwei teleskopartig verschiebbare Führungselemente 19 zu erkennen. Die teleskopartig verschiebbaren Führungselemente 19 laufen in zwei Führungsschienen 20 und 21, die innerhalb des Fahrzeugs jenseits der seitlichen Kanten des Fensters 6 verlaufen, so dass sie von außen nicht ersichtlich sind.

In den beiden Führungsschienen 20, 21 verlaufen Schubglieder, die bei 22 gestrichelt angedeutet sind. Die Führungsschienen 20 und 21 setzen sich unterhalb der Hutablage in Führungsrohren 23 und 24 fort, über die Führungsschienen 21 und 20 mit einem Getriebe 26 eines Getriebemotors 27 gekuppelt sind. Die Schubglieder 22 führen durch die Führungsschienen 20 bzw. 21 sowie die Verbindungsrohre 23 und 24.

Bei den Schubgliedern 22 handelt es sich um linienförmige flexible Elemente ähnlich Bowdenzügen, die an der Außenseite mit einer schraubenförmig verlaufenden Rippe versehen sind. Mit Hilfe der Rippe kämmen die Schubglieder 22 mit einem gestrichelt angedeuteten Ausgangszahnrad 28. Die in den Führungsschienen 20 und 21 befindlichen freien Enden der Schubglieder 22 wirken mit den Führungselementen 19 zusammen.

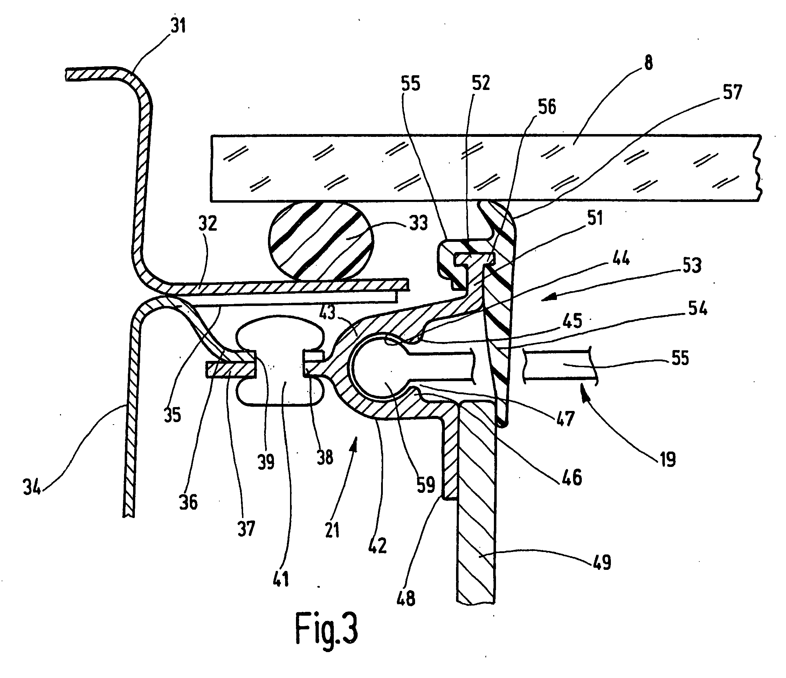

In Figur 3 ist eine Detailansicht zu erkennen, die den Aufbau und die Gestaltung der Führungsschiene 21 samt der Karosserieumgebung erkennen lässt. Der Aufbau der Führungsschiene 20 und deren Einbau in der Karosserie ist identisch, so dass eine Erläuterung für die Führungsschiene 21 ausreicht.

In Figur 3 ist ein Teil einer Außenschale 31 einer Karosserie zu erkennen, die bei 32 einen Flansch bildet, auf den mittels einer elastomeren Masse 33 die Scheibe 9 aufgeklebt ist. Die Ausschnittsdarstellung von Figur 3 lässt ferner einen Abschnitt einer Innenschale 34 der Fahrzeugkarosserie erkennen, die ebenfalls mit einem Flansch 35 versehen ist, der mit dem Flansch 32 beispielsweise durch Punktschweißen verbunden ist.

Zur Befestigung der Führungsschiene 21 sind aus dem Flansch 35 im Wesentlichen äquidistant zueinander mehrere Zungen oder Laschen 36 ausgeklinkt und hochgestellt.

Die Führungsschiene 21 ist ein Aluminiumstrangpressprofil, an dem eine über die Länge der Führungsschiene 21 durchgehende Flansch 37 ausgebildet ist. Der Flansch 37 liegt flach auf den Zungen 36 auf. Jeweils auf der Höhe einer Lasche 36 enthält der Flansch 37 eine Bohrung 38, die mit einer Bohrung 39 in der Lasche 36 fluchtet. Durch die Bohrungen führt ein Blindniet 41 hindurch, mittels dessen der Flansch 37 formschlüssig mit der Lasche 36 verbunden ist. Auf diese Weise ist die Führungsschiene 21 an mehreren Befestigungspunkten längs einer Seitenkante des Heckfensters 9 mit der Karosserie verbunden.

Ausgehend von dem Flansch 37 bildet das Profil für die Führungsschiene 21 zwei Schenkel 42 und 43, die zwischen sich eine teilzylindrische Führungsnut 44 begrenzen. Aufgrund von ausgebildeten Längsleisten 45 und 46 entsteht ein nach außen führender Schlitz 47, dessen lichte Weite kleiner ist, als der Durchmesser des Innenraums in der Führungsnut 44.

Im Anschluss an die Leiste 46 geht der Schenkel 42 in einen Flansch 48 über, der etwa rechtwinklig zu der Fläche der Fensterscheibe 9 verläuft.

Der Flansch 48 dient als Befestigungsflansch für einen Teil einer Innenverkleidung 49.

Der Schenkel 43 setzt sich ebenfalls über die Führungsnut 44 hinaus fort und bildet einen zu dem Flansch 48 parallelen Flansch 51, der mittig in einen Flansch 52 einmündet. Die Flansche 51 und 52 bilden ein T-förmiges Profil.

Das T-förmige Profil aus den Flanschen 51 und 52 dient der formschlüssigen Halterung einer elastomeren Profilleiste 53, die eine Lippe 54 aus einem elastomeren Material bildet. An ihrer Wurzel geht die Lippe 54 in einem verdickten Abschnitt 55 über, der eine T-Nut 56 enthält, die formschlüssig über das T-Profil aus den Flanschen 51 und 52 passt. Im Anschluss an den verdickten Bereich 55 ist eine weitere Lippe 57 vorhanden, die dichtend an der Scheibe 9 anliegt, um einen evtl. dort vorhandenen Spalt zu verschließen, ohne dass es zu Zwängen zwischen der Scheiben 9 und dem verdickten Bereich 55 kommt.

Die Lippe 54 läuft mit dem in Figur 3 erkennbaren Querschnittsprofil über die gesamte Länge der Führungsschiene 21 durch, und zwar wenigstens von der Oberkante 7 des Heckfensters bis hin zu dem Auslaufschlitz 11. Sie überdeckt den Spalt 47 der Führungsschiene 21 und liegt mit ihrer von der Scheibe 9 abliegenden Kante auf der Seitenverkleidung 49 auf.

Das Führungselement 19 weist einen im Wesentlichen zylindrischen Schaft 58 auf, der teleskopartig in einem nicht weiter erkennbaren Mittelstück der Zugstangenanordnung 17 verschiebbar ist. An seinem freien Ende trägt der zylindrische Schaft 58 einen kugelförmigen oder zylindrischen Führungskörper 59 der in der Führungsnut 44 gleitend läuft.

Da an sich die Lippe 54 den Spalt zwischen dem Schenkel 43 und der Kante der Seitenverkleidung 49 vollständig überdeckt, wird sie an derjenigen Stelle, an der sich der zylindrisch Schaft 58 befindet, von diesem elastisch offengehalten. Aufgrund Eigenelastizität liegt jedoch die Lippe 54 im Verlauf der Führungsschiene 21, also oberhalb und unterhalb des Schaftes 58, wieder auf der Seitenverkleidung 49 auf. Lediglich im Umfeld des Schaftes 58 ist die Lippe 54 hochgestellt. Zufolge der Eigenelastizität der Lippe 54 wird auf den Schaft 58 ständig eine Kraft ausgeübt, die bei der gezeigten Anordnung bestrebt ist, den Schaft 58 von der Scheibe 9 weg in Richtung auf den Gegenüberliegenden Randbereich der Führungsnut 44 zu drücken. Die dabei auftretende Vorspannung ist so groß, dass Schwingungen in der Zugstabanordnung 17 nicht in der Lage sind, den Führungskörper 59 von dem Wandbereich abzuheben, gegen den der Führungskörper 59 Folge der Eigenelastizität der Lippe 54 angedrückt wird.

Im übrigen arbeitet das Rollo in der Weise, dass durch in Gang setzen des Antriebsmotors 27 die schematisch angedeuteten Schubglieder 22 in den Führungsschienen 20 und 21 vorgschoben werden. Sie schieben daher die Führungskörper 59 der Zugstangenanordnung 17 vor sich her, die ständig auf ihrem gesamten Weg durch die Lippe 54 an die Wand der Führungsnut 44 angepresst werden.

Wenn der Motor 27 in der entgegengesetzten Richtung in Gang gesetzt wird, werden die Schubglieder 22 aus den Führungsschienen 20 und 21 zurückgezogen. Dieser Rückbewegung folgt die Zugstangenanordnung 17 zufolge der Kraft, die der in der Wickelwelle 16 sitzender Federmotor über die Rollobahn 13 auf die Zugstangenanordnung 17 überträgt.

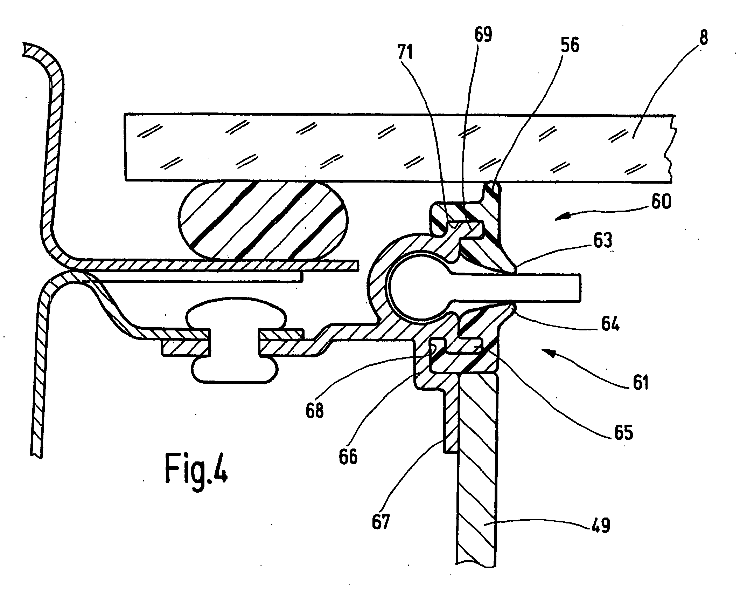

In Figur 4 ist ein geringfügig abgeändertes Ausführungsbeispiel gezeigt, das sich von dem Ausführungsbeispiel nach Figur 3 im Wesentlichen dadurch unterscheidet, dass Anstelle einer Profilleiste mit einer Lippe 53 zwei Profilleisten 60 und 61 verwendet werden, die zwei Lippen 63 und 64 entstehen lassen. Soweit bei dem Ausführungsbeispiel nach Figur 4 Bauteile auftauchen die funktionsmäßig den Bauteilen des Ausführungsbeispiels nach Figur 3 entsprechend, werden dieselben Bezugszeichen verwendet, ohne dass eine erneute detaillierte Beschreibung gegeben wird.

Während bei dem Ausführungsbeispiel nach Figur 3 der Flansch 37 mittig zwischen den beiden Schenkeln 42 und 43 verläuft, ist er bei dem Ausführungsbeispiel nach Figur abgekröpft und stellt eine Verlängerung des Schenkels 42 dar. Das freie Ende des Schenkels 42 endet in einer 1-förmig gewinkelten Leiste 65, die als Halteglied für die elastomere Profilleiste 61 dient. Etwa auf der Höhe der Mitte der Führungsnut 44 geht ein Schenkel 66 aus, der Z-förmig gekröpft ist und in einem Auflageflansch 67 für die Seitenverkleidung 49 endet. Zwischen dem Schenkel 66 und dem L-förmigen Schenkel 65 entsteht eine L-förmige Haltenut 68, die die elastomere Profilleiste 61 wirksam sichert. Sie läuft um den L-förmigen Schenkel 65 herum und in die L-förmige Nut 68.

Im entspannten Zustand verläuft die freie Kante der Lippe 64 etwa längs der Mitte der Führungsnut 44.

Der andere Schenkel 43 endet ebenfalls in einer L-förmig gekröpften Leiste 69 auf die Profilleiste 60 mit einer entsprechend komplimentären Nut 71 aufgeschoben ist. Die Profilleiste bildet außerdem die Lippe 56, die an der Innenseite der Heckfensterscheibe 8 anliegt. Im entspannten Zustand, d.h. dann, wenn sich der Schaft 57 nicht an der betreffenden Stelle zwischen den beiden Lippen 63 und 64 befindet, liegen diese gerade Eben aneinander an.

Durch die hohe Vorspannkraft, die die beiden Lippen 63 und 64 ausüben, wird ebenfalls die Klapperfreiheit gewährleistet. Sie wirken an der Kontaktstelle mit dem Schaft 57 als Reibungsdämpfer und dämpfen Schwingungen an dieser Stelle.

Schließlich ist zu bemerken, dass die beiden elastomeren Profilleisten 60 und 61 bei entspannter Lippe 63 bzw. 64 eine durchgehende Fläche bilden, die in Verlängerung der Fläche verlaufen, die durch die Innenseite der Seitenverkleidung 49 definiert ist.

Wie bei dem vorherigen Beispiel werden dadurch auch die Führungsschiene 21 und der Führungskanal 44 verdeckt. Mit Hilfe der Profilleisten. 60 und 61 sowie der Lippe 53 bildenden Profilleiste kann eine farblich Fortsetzung der Seitenverkleidung 49 erreicht werden. Auf die Farbe der Führungsschiene selbst, kommt es nicht mehr an. Sie tritt nicht mehr störend in Erscheinung.

Bei einem Heckscheibenrollo sind den Führungsschienen, in denen die Zugstange geführt ist, elastomere Profilleisten zugeordnet, die in der Lage ist, das betreffende Ende des Zugstabs in der Führungsschiene wirksam klapperfrei zu halten.

## Patentansprüche

1. Fensterrollo für Kraftfahrzeuge
mit einer Wickelwelle (16), an der mit einer Kante eine Rollobahn (13) befestigt ist,
mit einer Zugstangenanordnung (17), die an der Rollobahn (13) an einer Stelle angebracht ist, die von der Verbindungsstelle der Rollobahn (13) mit der Wickelwelle (16) entfernt liegt,
mit wenigstens einer Führungsschiene (20,21) zum Führen der Zugstangenanordnung (17), **gekennzeichnet durch**
wenigstens einer elastischen Lippe (54,63,64), die längs der Führungsschiene (20,21) verläuft und derart positioniert ist, dass sie mit der Zugstangenanordnung (17) in Berührung steht und **durch** die Zugstangenanordnung (17) elastisch verformt wird.

2. Fensterrollo nach Anspruch 1, **dadurch gekennzeichnet, dass** die Lippe (54,63,64) an einer elastischen Profilleiste (53,60,61) ausgebildet ist.

3. Fensterrollo nach Anspruch 1, **dadurch gekennzeichnet, dass** die Führungsschiene (20,21) hinterschnitten ist, derart, dass sie eine in Längsrichtung durchlaufenden Führungsnut (44) bildet, der von außen her durch einen in Längsrichtung durchgehenden Schlitz (47) zugänglich ist, wobei die lichte Weite des Schlitzes (47) kleiner ist, als die Weite der Führungsnut (44) gemessen in der selben Richtung .

4. Fensterrollo nach Anspruch 1, **dadurch gekennzeichnet, dass** die Führungsnut (44) einen Kreisquerschnitt oder Vierkantquerschnitt aufweist.

5. Fensterrollo nach Anspruch 1, **dadurch gekennzeichnet, dass** die Führungsschiene (20,21) einen Befestigungsflansch (37) aufweist der im Wesentlichen über die gesamte Länge der Führungsschiene (20,21) durchläuft.

6. Fensterrollo nach Anspruch 1, **dadurch gekennzeichnet, dass** die Führungsschiene (20,21) aus einem Strangpressprofil besteht.

7. Fensterrollo nach Anspruch 1, **dadurch gekennzeichnet, dass** die Führungsschiene (20,21) Haltemittel (51,65,68,69) zum vorzugsweise formschlüssigen Befestigen der elastischen Lippe (54,63,64) aufweist.

8. Fensterrollo nach Anspruch 7, **dadurch gekennzeichnet, dass** die Haltemittel (51,65,68,69) für die Befestigung der elastischen Lippe (54,63,64) von einer hinterschnittenen Nut oder einer im Querschnitt T-förmigen Leiste gebildet sind.

9. Fensterrollo nach Anspruch 1, **dadurch gekennzeichnet, dass** die Lippe (54,63,64) mit einer korrespondierenden Befestigungseinrichtung versehen ist, um die Lippe (54,63,64) formschlüssig mit der Führungsschiene (20,21) zu verbinden.

10. Fensterrollo nach Anspruch 1, **dadurch gekennzeichnet, dass** die Führungsschiene (20,21) einen Flansch (48,67) zur Aufnahme eines Teils einer Seitenverkleidung (49) eines Kraftfahrzeuges trägt.

11. Fensterrollo nach Anspruch 1, **dadurch gekennzeichnet, dass** zwei Lippen (54,63;64) vorgesehen sind.

12. Fensterrollo nach Anspruch 11, **dadurch gekennzeichnet, dass** die beiden Lippen (54,63,64) einander unmittelbar berühren.

13. Fensterrollo nach Anspruch 1, **dadurch gekennzeichnet, dass** die Lippe (54,63,64) derart ausgebildet ist, dass sie den Schlitz (47) überdeckt.

14. Fensterrollo nach Anspruch 1, **dadurch gekennzeichnet, dass** die Zugstangenanordnung (17) in der Länge teleskopartig verstellbar ist.

15. Fensterrollo nach Anspruch 1, **dadurch gekennzeichnet, dass** die Zugstangenanordnung (17) an wenigstens einem Ende einen Führungskörper (59) aufweist, der mit der Führungsschiene (20,21) zusammenwirkt.

16. Fensterrollo nach Anspruch 1, **dadurch gekennzeichnet, dass** der Führungskörper (59) über einen Hals (58) mit der Zugstangenanordnung (17) verbunden ist, wobei der Hals (58) einen kleineren Querschnitt aufweist, als der Führungskörper (59) gemessen in Richtung quer zur Längserstreckung der Führungsschiene (20,21).

17. Fensterrollo nach Anspruch 1, **dadurch gekennzeichnet, dass** der Führungskörper (59) einen kreisförmigen oder polygonalen Querschnitt aufweist.

18. Fensterrollo nach Anspruch 1, **dadurch gekennzeichnet, dass** der Führungskörper (59) in Längsrichtung gesehen, größere Abmessungen aufweist, als in Querrichtung, derart, dass der Führungskörper (59) gegenüber der Führungsschiene (20,21) nicht zu drehen ist.

## Claims

1. Window roller blind for motor vehicles
with a winding shaft (16), to which a blind (13) is fastened at one edge,
with a pull rod arrangement (17), which is attached to the blind (13) at a location, which lies at a distance from the location where the blind (13) is connected to the winding shaft (16),
with at least one guide rail (20, 21) for guiding the pull rod arrangement (17),
**characterised by**
at least one elastic lip (54, 63, 64), which runs along the guide rail (20, 21) and is positioned such that it is in contact with the pull rod arrangement (17) and is elastically deformed by the pull rod arrangement (17).

2. Window roller blind according to Claim 1, **characterised in that** the lip (54, 63, 64) is configured on an elastic profile strip (53, 60, 61).

3. Window roller blind according to Claim 1, **characterised in that** the guide rail (20, 21) is undercut in such a way that it forms a continuous guide groove (44) in the longitudinal direction, which is accessible from the outside through a continuous slot (47) in the longitudinal direction, wherein the inside width of the slot (47) is smaller than the width of the guide groove (44), measured in the same direction.

4. Window roller blind according to Claim 1, **characterised in that** the guide groove (44) has a circular cross-section or a square cross-section.

5. Window roller blind according to Claim 1, **characterised in that** the guide rail (20, 21) has a fastening flange, which extends substantially over the entire length of the guide rail (20, 21).

6. Window roller blind according to Claim 1, **characterised in that** the guide rail (20, 21) consists of an extruded section.

7. Window roller blind according to Claim 1, **characterised in that** the guide rail (20, 21) has holding elements (51, 65, 68, 69) to fasten the elastic lip (54, 63, 64) preferably in a positive manner.

8. Window roller blind according to Claim 7, **characterised in that** the holding elements (51, 65, 68, 69) for fastening the elastic lip (51, 63, 64) are formed by an undercut groove or a strip with a T-shaped cross-section.

9. Window roller blind according to Claim 1, **characterised in that** the lip (54, 63, 64) is provided with a corresponding fastening means to positively connect the lip (54, 63, 64) to the guide rail (20, 21).

10. Window roller blind according to Claim 1, **characterised in that** the guide rail (20,21) bears a flange (48, 67) to receive a part of a side lining (49) of a motor vehicle.

11. Window roller blind according to Claim 1, **characterised in that** two lips (54, 63, 64) are provided.

12. Window roller blind according to Claim 11, **characterised in that** the two lips (54, 63, 64) directly touch one another.

13. Window roller blind according to Claim 1, **characterised in that** the lip (54, 63, 64) is configured so that it covers the slot (47).

14. Window roller blind according to Claim 1, **characterised in that** the pull rod arrangement (17) is adjustable in length in the manner of a telescope.

15. Window roller blind according to Claim 1, **characterised in that** on at least one end the pull rod arrangement (17) has a guide body (59), which cooperates with the guide rail (20, 21).

16. Window roller blind according to Claim 1, **characterised in that** the guide body (59) is connected to the pull rod arrangement (17) by means of a neck (58), wherein the neck (58) has a smaller cross-section than the guide body (59), measured in the direction transversely to the longitudinal extension of the guide rail (20, 21).

17. Window roller blind according to Claim 1, **characterised in that** the guide body (59) has a circular or polygonal cross-section.

18. Window roller blind according to Claim 1, **characterised in that** the guide body (59) has larger dimensions viewed in the longitudinal direction than in the transverse direction, such that the guide body (59) cannot be rotated relative to the guide rail (20, 21).

## Revendications

1. Store enrouleur de vitre pour véhicules automobiles, comprenant
- un arbre d'enroulement (16) auquel est fixé un bord d'une bande de store (13),
- un agencement de barre de traction (17) qui est fixé à la bande de store (13) en un endroit qui est éloigné du point de liaison de la bande de store (13) à l'arbre d'enroulement (16),
- au moins un rail de guidage (20, 21) pour le guidage de l'agencement de barre de traction (17),
**caractérisé par le fait qu'**il comporte au moins une lèvre (54, 63, 64) élastique qui s'étend le long du rail de guidage (20, 21) et est disposée de manière à être en contact avec l'agencement de barre de traction (17) et à être déformée élastiquement par l'agencement de barre de traction (17).

2. Store selon la revendication 1, **caractérisé par le fait que** la lèvre (54, 63, 64) est réalisée sur une baguette profilée (53, 60, 61) élastique.

3. Store selon la revendication 1, **caractérisé par le fait que** le rail de guidage (20, 21) est usiné en contre-dépouille de manière telle qu'il forme une rainure de guidage (44) continue s'étendant dans la direction longitudinale et accessible de l'extérieur, à travers une fente (47) continue dans la direction longitudinale, la largeur intérieure de la fente (47) étant inférieure à la largeur dé la rainure de guidage (44), mesurée dans le même sens.

4. Store selon la revendication 1, **caractérisé par le fait que** la rainure de guidage (44) présente une section circulaire ou une section à quatre pans.

5. Store selon la revendication 1, **caractérisé par le fait que** le rail de guidage (20, 21) présente une aile de fixation (37) qui s'étend sensiblement sur toute la longueur du rail de guidage (20, 21).

6. Store selon la revendication 1, **caractérisé par le fait que** le rail de guidage (20, 21) est constitué d'un profilé extrudé.

7. Store selon la revendication 1, **caractérisé par le fait que** le rail de guidage (20, 21) comporte des moyens de retenue (51, 65, 68, 69) destinés à la fixation de la lèvre (54, 63, 64) élastique, de préférence par complémentarité de formes.

8. Store selon la revendication 7, **caractérisé par le fait que** les moyens de retenue (51, 65, 68, 69) destinés à la fixation de la lèvre (54, 63, 64) élastique sont constitués d'une rainure usinée en contre-dépouille ou d'une baguette de section transversale en forme de T.

9. Store selon la revendication 1, **caractérisé par le fait que** la lèvre (54, 63, 64) est pourvue d'un moyen de fixation correspondant pour relier la lèvre (54, 63, 64) par complémentarité de formes au rail de guidage (20, 21).

10. Store selon la revendication 1, **caractérisé par le fait que** le rail de guidage (20, 21) comporte une aile (48, 67) destinée à recevoir une partie d'un habillage latéral (49) d'un véhicule automobile.

11. Store selon la revendication 1, **caractérisé par le fait que** deux lèvres (54, 63, 64) sont prévues.

12. Store selon la revendication 11, **caractérisé par le fait que** les deux lèvres (54, 63, 64) sont en contact direct l'une avec l'autre.

13. Store selon la revendication 1, **caractérisé par le fait que** la lèvre (54, 63, 64) est configurée de manière telle qu'elle recouvre la fente (47).

14. Store selon la revendication 1, **caractérisé par le fait que** l'agencement de barre de traction (17) peut être réglé en longueur de manière télescopique.

15. Store selon la revendication 1, **caractérisé par le fait que** l'agencement de barre de traction (17) présente, au moins à une extrémité, un corps de guidage (59) qui coopère avec le rail de guidage (20, 21).

16. Store selon la revendication 1, **caractérisé par le fait que** le corps de guidage (59) est relié par l'intermédiaire d'un col (58) à l'agencement de barre de traction (17), ledit col (58) présentant une section qui est inférieure à celle du corps de guidage (59), mesurée perpendiculairement à la longueur du rail de guidage (20, 21).

17. Store selon la revendication 1, **caractérisé par le fait que** le corps de guidage (59) présente une section circulaire ou polygonale.

18. Store selon la revendication 1, **caractérisé par le fait que**, vu dans le sens de la longueur, le corps de guidage (59) présente des dimensions qui sont supérieures à celles mesurées dans la direction transversale, de manière à ce que le corps de guidage (59) ne puisse pas être tourné par rapport au rail de guidage (20, 21).
